# EUROPÄISCHE PATENTSCHRIFT

(11) **EP 2 908 974 B1**
(45) Veröffentlichungstag und Bekanntmachung des Hinweises auf die Patenterteilung: **05.05.2021**
(21) Anmeldenummer: 13776790.1
(22) Anmeldetag: 11.10.2013
(51) Int. Cl.: B23B 41/14, B23D 77/00, B23P 15/46, B23D 77/02

(54) **REIBAHLE SOWIE VERFAHREN ZU DEREN HERSTELLUNG**
REAMER AND A METHOD FOR THE PRODUCTION OF SAME
ALÉSOIR ET PROCÉDÉ POUR LE FABRIQUER

(30) Priorität: 19.10.2012 DE 102012021075
(43) Veröffentlichungstag der Anmeldung: 26.08.2015
(73) Patentinhaber: MAS GmbH, 71229 Leonberg (DE)
(72) Erfinder: RIEMKE, Dietrich, 66822 Lebach (DE)
(74) Vertreter: Ostertag & Partner Patentanwälte mbB
(86) Internationale Anmeldenummer: PCT/EP2013/071336
(87) Internationale Veröffentlichungsnummer: WO 2014/060323

(56) Entgegenhaltungen:
- WO-A1-2008/133295
- FR-A- 1 293 139
- GB-A- 884 843
- JP-A- 2005 212 015
- US-A- 6 030 156
- US-A1- 2007 228 879
- US-A1- 2009 116 913

## Beschreibung

Die vorliegende Erfindung betrifft eine Reibahle nach dem Oberbegriff des Anspruchs 1. Eine solche Reibahle ist aus der WO 2008/133295 A1 bekannt.

Ferner betrifft die vorliegende Erfindung ein Verfahren zum Herstellen einer Reibahle.

Reibahlen, die auch als Räumahlen bezeichnet werden, sind Werkzeuge, die zur Feinbearbeitung von Bohrungen durch Reiben verwendet werden. Durch das Reiben können die Oberflächengüte der Bohrungen als auch die Form- und Maßgenauigkeit gegenüber den ursprünglich hergestellten Bohrungen verbessert werden.

Generell können Reibahlen dabei über den Umfang verteilt eine Mehrzahl von Schneiden haben, die durch parallel zur Längsachse verlaufende Nuten voneinander getrennt sind. Alternative Reibahlen weisen eine Linkssteigung auf, um Späne in Einführrichtung abführen zu können. Reibahlen mit Rechtssteigung können für Sacklöcher verwendet werden.

Als Schneidstoffe kommen HSS, Hartmetall, Cermet, polykristalliner Diamant oder Bornitrid in Frage. Insbesondere bei Verwendung von Bornitrid für die Schneidelemente kann auch eine Hartbearbeitung erfolgen.

Insbesondere bei kleinen Bohrungsdurchmessern stoßen die herkömmlichen Reibahlenkonzepte jedoch an ihre Grenzen.
Aus der JP 2005-212015 A ist eine Vorrichtung zur Bearbeitung von konkaven Flächen bekannt, bei der ein Plattenelement außermittig in Bezug auf eine Längsachse eines Trägerabschnitts an einer Trägerfläche des Trägerabschnitts festgelegt ist. Die Schneidplatte weist eine konvex ausgeführte Schneide auf, mittels der die konkaven Flächen am Werkstück herstellbar sind.
Aus der eingangs genannten WO 2008/133295 A1 ist eine Reibahle bekannt, bei der mehrere plattenförmige Schneidelemente auf planen, aber zur Längsachse geneigten Trägerflächen befestigt sind.
Die JP 2010-179439 A ist eine Reibahle bekannt, bei der ein prismenförmiges Schneidelemente in eine Halterung mit einer keilförmigen Aufnahmefläche eingesetzt ist.

Es ist demzufolge eine Aufgabe der Erfindung, eine verbesserte Reibahle sowie ein verbessertes Verfahren zu deren Herstellung anzugeben, wobei die Reibahle generell dazu ausgebildet ist, auch kleine Durchmesser reiben zu können, insbesondere auch Durchmesser kleiner 1 mm, und/oder eine Reibahle anzugeben, die sich kostengünstig und einfach herstellen lässt.

Diese Aufgabe wird gemäß der Erfindung durch eine Reibahle mit den Merkmalen des Anspruchs 1 gelöst.

Das Schneidelement kann außermittig an dem Trägerabschnitt angebracht werden. Hierdurch lässt sich die Reibahle einfach herstellen, indem das Schneidelement an der tangentialen Trägerfläche angebracht wird.

Demzufolge kann eine höhere Verbindungsfestigkeit zwischen Schneidelement und Trägerabschnitt erzielt werden, insbesondere aufgrund der Tatsache, dass die Belastung beim Reiben quer zu der Trägerfläche erfolgt. Im Gegensatz zu Reibahlen, bei denen ein Schneidelement an einer radial ausgerichteten vorderen Stirnseite eines Halsabschnittes festgelegt wird, kann hierdurch eine höhere Festigkeit gegen ein Abscheren des Schneidelementes von dem Trägerabschnitt realisiert werden.

Ferner ermöglicht diese Konstruktion dann dem Grunde nach, dass auch Reibahlen mit kleinen Durchmessern realisiert werden können, die beispielsweise kleiner sein können als 1 mm.

Die Reibahle kann in ein Futter eines Werkzeugantriebs eingespannt werden, oder an einem feststehenden Werkzeughalter festgelegt werden.

Die Aufgabe wird somit vollkommen gelöst.

Erfindungsgemäß ist das Schneidelement als Plattenelement ausgebildet, das eine Auflagefläche aufweist, die auf der Trägerfläche aufliegt.

Durch die plane Auflage des Plattenelementes auf der Trägerfläche wird eine hohe Verbindungsfestigkeit erzielt. Das Plattenelement ist in der radialen Draufsicht vorzugsweise rechteckig, mit einer Seitenkante parallel zu der Längsachse. Die andere Seitenkante ist vorzugsweise wenigstens 0,2-fach, insbesondere aber wenigstens 0,7-fach so groß wie der Reibdurchmesser.

Wenigstens eine Ecke des Plattenelementes ist dabei als Schneidecke ausgebildet.

Das Plattenelement ist dabei so in Bezug auf den Trägerabschnitt angeordnet, dass eine Schneidecke an dem Plattenelement gebildet ist, die im Schnittpunktbereich einer der Auflagefläche gegenüberliegenden Außenfläche, einer vorderen Stirnfläche und einer ersten Seitenfläche des Plattenelementes liegt.

Hierbei liegt die Schneidecke folglich an einem radial außen liegenden Bereich des Plattenelementes, wenn dieses an der Trägerfläche festgelegt ist, so dass die Reibahlenfunktion auf konstruktiv einfache Art und Weise realisierbar ist.

Insgesamt ist es ferner von Vorteil, wenn das Schneidelement eine konzentrisch zu der Längsachse ausgerichtete Rundschlifffase aufweist.

Die Reibahle kann sich aufgrund der Rundschlifffase selbsttätig in der Bohrung führen, wenn der Reibvorgang durchgeführt wird. Die Rundschlifffase ist dabei an dem Schneidelement ausgebildet, das vorzugsweise aus einem harten Material hergestellt ist, so dass die Führungseigenschaft nur einem geringen Verschleiß unterliegt.

Es versteht sich, dass die Rundschlifffase axial angrenzend an das Schneidelement auch an dem Halsabschnitt ausgebildet sein kann, um über eine möglichst große Länge des Halsabschnittes die Führung innerhalb der Bohrung zu realisieren.

Erfindungsgemäß weist der Trägerabschnitt wenigstens eine Trägerfläche auf, die unter einem Trägerflächenwinkel größer 0° und kleiner 90° in Bezug auf die Längsachse ausgerichtet ist, wobei eine Außenfläche des Schneidelementes parallel zu der Längsachse ausgerichtet ist.

Dadurch wird die Trägerfläche zum einen vergrößert, da diese schräg verläuft zu der Längsachse. Zum anderen wird hierdurch die Stabilität des Trägerabschnittes erhöht, da dieser aufgrund des Trägerflächenwinkels in einem zum Halsabschnitt weisenden Bereich mit einer größeren Materialstärke ausgeführt werden kann. Demzufolge kann das Schneidelement mit einer höheren Stabilität mittels des Trägerabschnittes geführt werden.

Von besonderem Vorzug ist es hierbei, wenn der Trägerflächenwinkel im Bereich von 2° bis 45° liegt, insbesondere im Bereich von 3° bis 30°, und besonders bevorzugt im Bereich von 5° bis 15°.

Hierdurch werden die oben beschriebenen Vorteile weiter optimiert.

Ferner ist es insgesamt vorteilhaft, wenn das Schneidelement fest mit dem Trägerabschnitt verbunden ist, insbesondere über eine Klebe- oder eine Lötverbindung.

Generell ist es natürlich auch möglich, das Schneidelement an dem Trägerabschnitt festzuklemmen. Gerade bei sehr kleinen Durchmessern ist es jedoch bevorzugt, wenn die Verbindung über eine flächige Lötverbindung oder flächige Klebeverbindung erfolgt. Hierdurch kann eine hohe Verbindungsfestigkeit realisiert werden. Alternativ ist es auch möglich, zu diesem Zweck Schweißtechniken oder andere Verbindungstechniken anzuwenden.

Ferner ist es insgesamt vorteilhaft, wenn die Reibahle einen Reibdurchmesser von 0,2 mm bis 30 mm aufweist, insbesondere in einem Bereich von 0,2 mm bis 5 mm, insbesondere in einem Bereich von 0,2 mm bis 3 mm, und insbesondere bevorzugt in einem Bereich von 0,5 mm bis 2 mm.

Generell kann die Reibahle auch einen Durchmesserbereich von 0,2 mm bis 0,9 mm aufweisen.

Gemäß einer weiteren bevorzugten Ausführungsform weist der Trägerabschnitt zwei Trägerflächen auf, die jeweils unter einem Trägerflächenwinkel größer 0° und kleiner 90° in Bezug auf die Längsachse ausgerichtet sind, derart, dass die Trägerflächen an einem vorderen Ende des Reibabschnittes kürzer voneinander beabstandet sind als in einem hinteren, zum Halsabschnitt hin weisenden Ende des Reibabschnittes.

Hierdurch kann der Trägerabschnitt im Längsschnitt konisch zulaufend ausgebildet sein, so dass eine hohe Verbindungsfestigkeit zwischen dem Trägerabschnitt und dem Halsabschnitt realisierbar ist. Der Trägerabschnitt ist bei allen Ausführungsformen vorzugsweise einstückig mit dem Halsabschnitt ausgebildet.

Die obige Aufgabe wird ferner gelöst durch ein Verfahren zum Herstellen einer Reibahle gemäß Anspruch 8.

Die Trägerfläche kann dabei insbesondere außermittig, also beispielsweise tangential, in Bezug auf die Längsachse ausgerichtet sein.

Die oben genannten Flächen sind, soweit es vorliegend nicht anders erläutert wird, insbesondere als ebene Flächen ausgebildet.

Das Herstellen des Fertigmaßes des Reibabschnittes kann beinhalten, eine Rundschlifffase an dem Plattenelement und/oder an einem Halsabschnitt der Reibahle vorzusehen. Ferner kann das Herstellen des Fertigmaßes beinhalten, eine Freifläche im Bereich einer Schneidecke auszubilden, die windschief zu der Längsachse ausgerichtet ist.

Hierdurch kann eine Schneidkante eingerichtet werden, die windschief zu der Längsachse ausgerichtet ist und durch die das Reiben auf eine "schälende" Art und Weise erfolgt, indem der eigentliche Schneidvorgang sich während des Reibens entlang der Schneidkante bewegt.

Hierdurch kann die Laufruhe beim Reiben deutlich erhöht werden.

Von besonderem Vorzug ist es bei dem erfindungsgemäßen Verfahren, wenn das Plattenelement eine Trägerschicht und eine Schicht aus einem Schneidstoff aufweist.

Derartige Plattenelemente können kostengünstig hergestellt und "von der Stange" bereitgestellt werden.

Dabei ist es generell möglich, das Plattenelement so an dem Trägerabschnitt des Reibabschnittes festzulegen, dass die Trägerschicht eine Auflagefläche aufweist, die auf der Trägerfläche des Trägerabschnittes aufliegt.

Von besonderem Vorzug ist es jedoch, wenn das Plattenelement mit der Schneidstoffschicht an der Trägerfläche festgelegt wird.

Hierdurch steht die Trägerschicht in einem Zwischenstadium des Herstellungsverfahrens in radialer Richtung gegenüber der Schneidstoffschicht vor.

Von besonderem Vorzug ist es daher, wenn das Herstellen des Fertigmaßes des Reibabschnittes beinhaltet, die Trägerschicht zumindest teilweise, insbesondere jedoch vollständig, zu entfernen.

Demzufolge ist in der bevorzugten endgültigen Ausgestaltung der Reibahle ein einstückiges Schneidelement aus einem Schneidmaterial an dem Trägerabschnitt der Reibahle festgelegt.

Wie oben erwähnt, kann das Festlegen durch Löten oder durch Kleben oder durch andere geeignete Verbindungsverfahren erfolgen.

Besonders bevorzugt ist es, wenn der Trägerabschnitt mehrere Trägerflächen aufweist, an denen jeweils ein Plattenelement auf die oben beschriebene Art und Weise festgelegt wird.

Hierdurch kann in der axialen Draufsicht auf das Ende der Reibahle im hergestellten Zustand im Wesentlichen eine Polygonalform erzielt werden, insbesondere eine quadratische Form. Die vier Eckbereiche eines solchen Quadrates können dabei jeweils Schneidecken aufweisen. Die Kreissehnenabschnitte zwischen den Seitenkanten dieser Quadratform und dem Reibdurchmesser bilden dabei kreissegmentförmige Spanräume, so dass es nicht notwendig ist, den Reibabschnitt mit speziellen Spanräumen auszubilden.

Wie erwähnt, können an dem Trägerabschnitt zwei Plattenelemente festgelegt werden. Es ist generell jedoch auch möglich, über den Umfang verteilt eine Mehrzahl von Plattenelementen festzulegen, derart, dass sich im Anschluss ein Querschnitt eines Vieleckes ergibt.

Das Ausbilden des Fertigmaßes des Reibabschnittes kann beispielsweise durch Schleifen oder Lasern erfolgen.

In dem Trägerabschnitt kann im Bereich zwischen zwei Plattenelementen ein Loch vorgesehen werden, um über dieses Kühl- oder Schmierflüssigkeit zuzuführen.

Generell können mit der vorliegenden Erfindung Reibahlen mit sehr kleinem Arbeitsdurchmesser erzeugt werden. Ferner wird gleichzeitig eine relativ große Fläche für die Verbindung zwischen dem Trägerabschnitt und dem Schneidelement bereitgestellt, so dass eine feste Verbindung möglich ist. Insbesondere bei einem sich konisch aufweitenden Trägerabschnitt kann eine steife Verbindung zwischen dem Reibabschnitt und dem Halsabschnitt hergestellt werden.

Bei der Ausführungsform mit zwei Trägerflächen, die jeweils unter einem Trägerflächenwinkel angeordnet sind, können die Trägerflächen an ihrem vorderen Ende direkt ineinander übergehen, so dass der Abstand im vorderen Ende des Reibabschnittes gleich null ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Seitenansicht einer ersten Ausführungsform einer Reibahle, die nicht Gegenstand der beanspruchten Erfindung ist;
- Fig. 2: eine Ansicht der Reibahle der Fig. 1 von vorne in axialer Richtung;
- Fig. 3: eine Draufsicht auf die Reibahle der Fig. 1;
- Fig. 4: eine der Fig. 1 vergleichbare Ansicht einer erfindungsgemäßen Reibahle;
- Fig. 5: eine der Fig. 2 vergleichbare Ansicht der Reibahle der Fig. 4;
- Fig. 6: eine Seitenansicht einer weiteren Ausführungsform einer erfindungsgemäßen Reibahle;
- Fig. 7: eine Draufsicht auf die Reibahle der Fig. 6;
- Fig. 8: eine Detailansicht VIII der Fig. 6;
- Fig. 9: eine axiale Draufsicht auf die Reibahle der Fig. 6 bis 8;
- Fig. 10: eine schematische Darstellung einer axialen Draufsicht auf eine weitere Ausführungsform einer erfindungsgemäßen Reibahle;
- Fig. 11: eine schematische perspektivische Ansicht eines Reibabschnittes einer weiteren Ausführungsform einer Reibahle, die nicht Gegenstand der beanspruchten Erfindung ist;
- Fig. 12: eine Detailansicht eines Schneideckenbereiches einer erfindungsgemäßen Reibahle;
- Fig. 13: eine schematische perspektivische Ansicht einer weiteren Ausführungsform einer erfindungsgemäßen Reibahle, die prinzipiell der Ausführungsform der Fig. 6 bis 9 entspricht, wobei entsprechende Anschliffe bereitgestellt sind;
- Fig. 14: eine Längsansicht eines Reibahlenrohlings, an dem zwei Schneidelemente festgelegt sind;
- Fig. 15: eine Draufsicht auf den Reibahlenrohling der Fig. 14;
- Fig. 16: eine axiale Vorderansicht des Reibahlenrohlings der Fig. 14; und
- Fig. 17: eine Detailansicht XVII der Fig. 14.

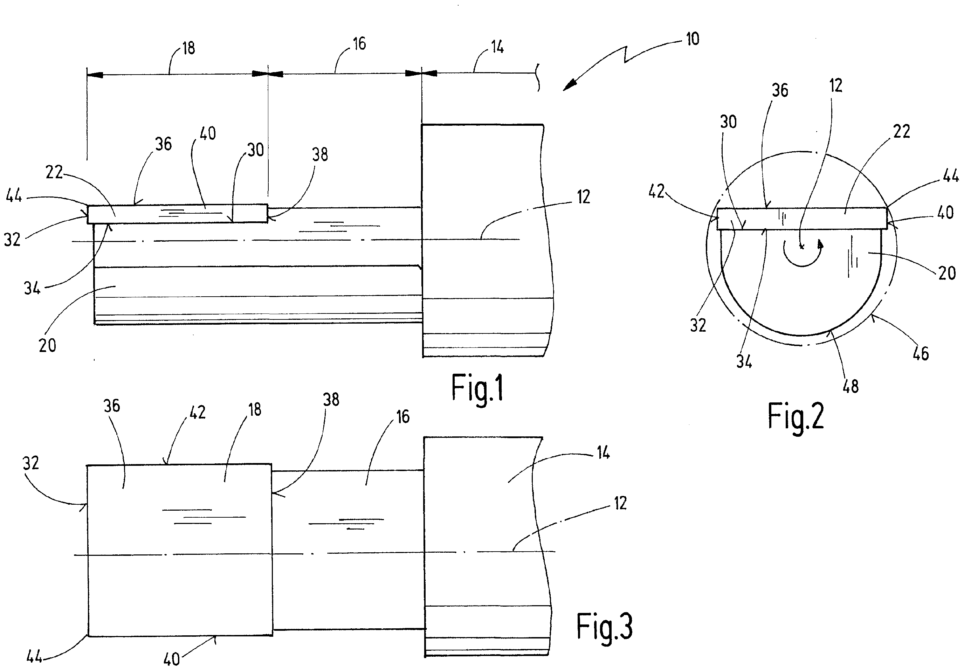

In den Fig. 1 bis 3 ist eine Reibahle schematisch dargestellt und generell mit 10 bezeichnet.

Die Reibahle 10 weist einen Schaftabschnitt 14 auf, der entlang einer Längsachse 12 ausgerichtet ist. Von dem Schaftabschnitt 14 erstreckt sich ein Halsabschnitt 16, der ebenfalls entlang der Längsachse 12 ausgerichtet ist. Der Halsabschnitt 16 und der Schaftabschnitt 14 sind einstückig miteinander ausgebildet und beispielsweise aus einem üblichen Werkzeugstahl oder Hartmetall oder Schwermetall hergestellt.

An den Halsabschnitt 16 schließt sich in axialer Richtung ein Reibabschnitt 18 an. Der Reibabschnitt 18 beinhaltet einen Trägerabschnitt 20, der vorzugsweise einstückig mit dem Halsabschnitt 16 ausgebildet ist, wobei an dem Trägerabschnitt 20 ein Schneidelement 22 festgelegt ist, das insbesondere als Plattenelement bzw. Schneidplatte ausgebildet sein kann.

Das Schneidelement 22 kann insbesondere ein CBN-Material aufweisen, kann jedoch auch andere Schneidmaterialien wie Cermet etc. aufweisen.

Der Trägerabschnitt 20 weist eine Trägerfläche 30 auf, die tangential zu der Längsachse 12 ausgerichtet ist. Das Schneidelement 22 ist flächig auf der Trägerfläche 30 festgelegt, derart, dass das Schneidelement 22 außermittig in Bezug auf die Längsachse 12 angeordnet ist.

Das Schneidelement 22 weist eine vordere Stirnfläche 32 und eine Auflagefläche 34 auf. Die Auflagefläche 34 ist flächig mit der Trägerfläche 30 verbunden, beispielsweise durch Löten, durch Kleben oder durch andere Verbindungsverfahren.

Das Schneidelement 22 weist auf der der Auflagefläche 34 gegenüberliegenden Seite eine Außenfläche 36 auf, die bei der vorliegenden Ausführungsform parallel zu der Auflagefläche 34 ausgebildet ist. Ferner weist das Schneidelement 22 eine hintere Stirnfläche 38 auf, die beispielsweise an einer Radialschulter des Halsabschnittes 16 anliegen kann. Ferner beinhaltet das Schneidelement 22 eine erste Seitenfläche 40 und eine gegenüberliegende zweite Seitenfläche 42.

Eine erste Schneidecke der Reibahle 10 ist im Bereich eines Schnittpunktes zwischen der vorderen Stirnfläche 32, der Außenfläche 36 und der ersten Seitenfläche 40 ausgebildet.

Die Reibahle 10 kann mit geeigneten Anschnittfasen versehen sein. Ferner ist am Außenumfang des Schneidelementes 22 eine in den Fig. 1 bis 3 nicht näher bezeichnete Rundschlifffase ausgebildet, die zu Führungszwecken dient. Ferner kann im Bereich der Schneidecke 44 eine Freifläche ausgebildet sein, durch die eine Schneidkante gebildet wird.

Die Schneidecke 44 definiert einen Reibdurchmesser 46, der in Fig. 2 dargestellt ist.

Ferner kann an dem Trägerabschnitt 20 und/oder an dem Halsabschnitt 16 ein Führungsabschnitt 48 ausgebildet sein, der vorliegend beabstandet von dem Reibdurchmesser 46 ausgebildet ist. Der Führungsabschnitt 48 kann jedoch auch mit dem Reibdurchmesser 46 zusammenfallen und für eine geeignete Axialführung entlang der Längsachse 12 sorgen. Der Führungsabschnitt 48 kann dabei vom Radius her mit der oben genannten Rundschlifffase zusammenfallen.

Das Schneidelement 22 ist, wie erwähnt, als Plattenelement ausgebildet und weist eine im Wesentlichen quaderförmige Gestalt auf.

Durch die flächige Verbindung zwischen der Trägerfläche 30 und der Auflagefläche 34 wird eine hohe Verbindungsfestigkeit zwischen dem Schneidelement 22 und dem Trägerabschnitt 20 erzielt.

In den folgenden Figuren werden weitere Ausführungsformen von Reibahlen beschrieben, die hinsichtlich Aufbau und Funktionsweise generell der Reibahle 10 der Fig. 1 bis 3 entspricht. Gleiche Elemente sind daher durch gleiche Bezugszeichen gekennzeichnet. Im Folgenden werden im Wesentlichen die Unterschiede erläutert.

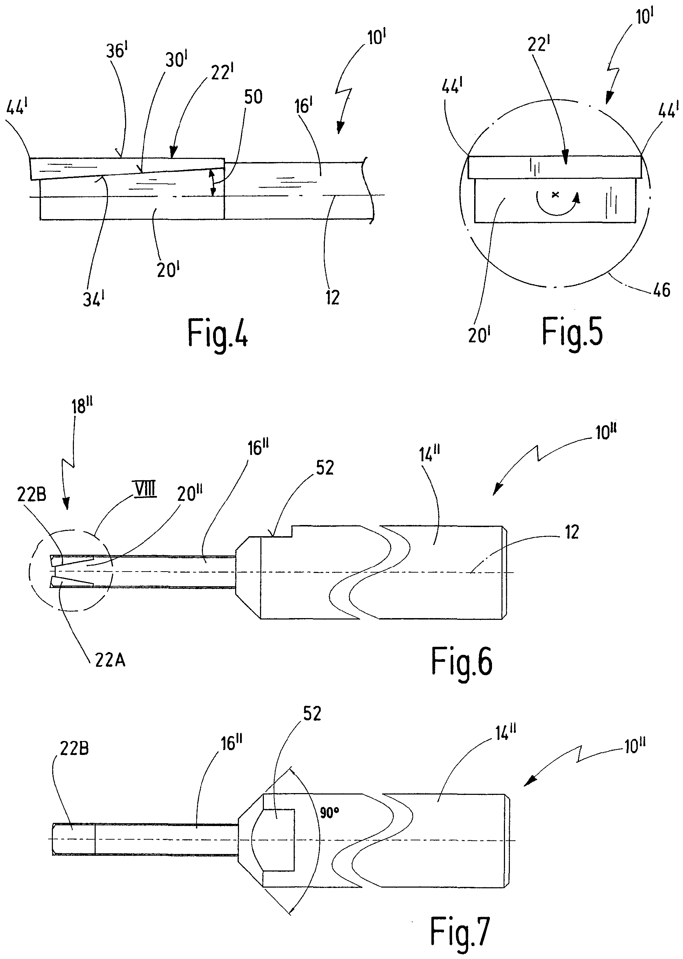

In den Fig. 4 und 5 ist eine erfindungsgemäße Reibahle 10' gezeigt, bei der die Trägerfläche 30' unter einem Trägerflächenwinkel 50 im Bereich von größer 0° und kleiner 90° in Bezug auf die Längsachse ausgerichtet ist. Insbesondere kann der Trägerflächenwinkel im Bereich von 2° bis 45° liegen, besonders bevorzugt im Bereich von 3° bis 30°, besonders bevorzugt im Bereich von 5° bis 15° oder von 10° bis 20°.

Durch die Ausbildung des Trägerflächenwinkels 50 kann die Fläche der Verbindung zwischen Schneidelement 22 und Trägerabschnitt 20 vergrößert werden. Zum anderen kann hierdurch bei einem vorgegebenen Reibdurchmesser die Materialstärke am Übergang zwischen Trägerabschnitt 20' und Halsabschnitt 16' vergrößert werden, so dass der Trägerabschnitt 20' mit einer höheren Festigkeit mit dem Halsabschnitt 16' verbunden ist.

Bei der Ausführungsform der Fig. 4 und 5 verlaufen die Auflagefläche 34' und die Außenfläche 36' folglich nicht parallel sondern sind unter dem Trägerflächenwinkel 50 zueinander ausgerichtet.

In den Fig. 6 bis 9 ist eine weitere Ausführungsform einer erfindungsgemäßen Reibahle 10" gezeigt. Diese entspricht hinsichtlich Aufbau und Funktionsweise generell der Reibahle 10' der Fig. 4 und 5. Im Folgenden werden im Wesentlichen die Unterschiede erläutert.

Der Schaftabschnitt 14 weist bei der Reibahle 10" einen Verdrehsicherungsabschnitt 52 auf.

Ferner sind im Bereich des Reibabschnittes 18" zwei Schneidelemente 22 in Form von Plattenelementen an dem Trägerabschnitt 20" festgelegt, und zwar auf gegenüberliegenden Seiten der Längsachse 12.

Die Schneidelemente 22 können jeweils ausgebildet sein wie das Schneidelement 22' der Fig. 4 und 5 und sind in den Figuren mit 22A, 22B bezeichnet.

Die entsprechend vorgesehenen Trägerflächen 30A, 30B sind unter einem Winkel zueinander ausgerichtet, der dem doppelten Trägerflächenwinkel entspricht und beispielsweise im Bereich von 10° bis 40° liegen kann, insbesondere im Bereich von 10° bis 30°.

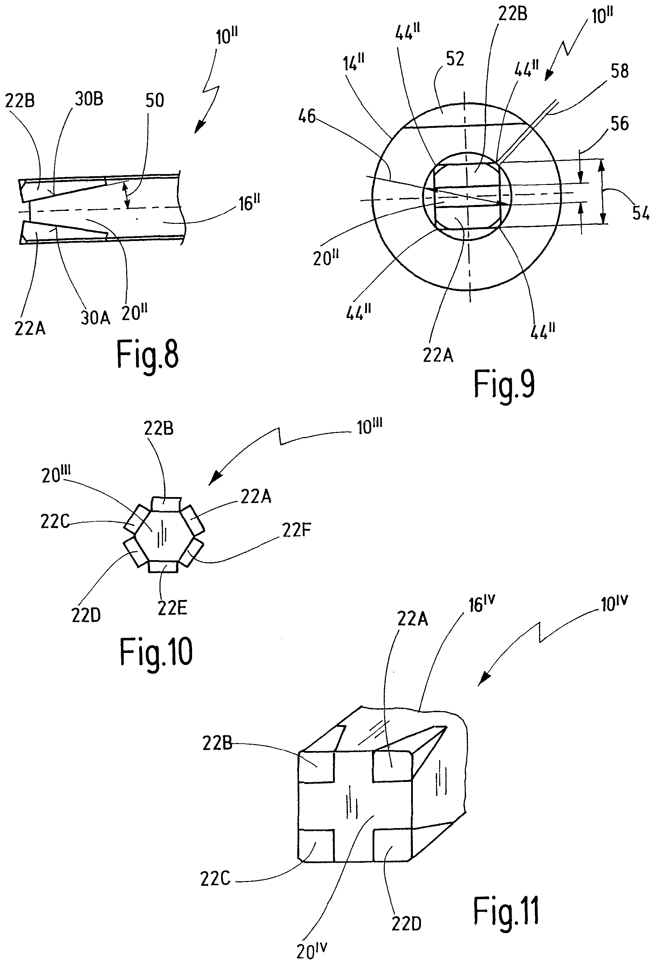

Der Trägerabschnitt 20" ist dabei im Längsschnitt konisch ausgebildet, wobei die Trägerflächen 30A, 30B benachbart zu dem Halsabschnitt 16" weiter voneinander beabstandet sind als im Bereich des freien Endes des Trägerabschnittes 20. In der axialen Draufsicht (Fig. 9) bilden die zwei Schneidelemente 22A, 22B zwei gegenüberliegende Abschnitte einer Quadratform. Dabei kann im Bereich von jeder Ecke der Quadratform eine Schneidecke 44" ausgebildet sein. Die Diagonale des Quadrates definiert dabei den Reibdurchmesser 46.

Die Höhe des Quadrates ist in Fig. 9 bei 54 gezeigt, wobei die Seitenlänge des Quadrates kleiner ist als der Reibdurchmesser 46. In Fig. 9 ist ferner die radiale Restdicke 56 des Trägerabschnittes 20" im Bereich seines vorderen freien Endes dargestellt.

Ferner zeigt Fig. 9, dass der Reibabschnitt 18 und der Halsabschnitt 16 eine Rundschlifffase 58 aufweisen können, die in axialer Richtung gesehen mit den Schneidecken 44" ausgerichtet ist.

Folglich kann sich die Reibahle 10 beim Reiben über den Umfang gleichmäßig verteilt in der Bohrung abstützen.

Die kreissegmentförmigen Bereiche zwischen den Seitenkanten der Quadratform und dem Reibdurchmesser 46 bilden dabei kreissegmentförmige Spanräume.

Während bei den Ausführungsformen der Fig. 1 bis 5 folglich jeweils nur ein Schneidelement 22 im Bereich des Trägerabschnittes 20 festgelegt ist, sind dies bei den Ausführungsformen der Fig. 6 bis 9 zwei Schneidelemente 22. Es ist jedoch auch möglich, eine größere Anzahl von Schneidelementen an einem Trägerabschnitt festzulegen, wie es in Fig. 10 gezeigt ist, wo als Beispiel sechs Schneidelemente 22A bis 22F an einem polygonalen Trägerabschnitt 20'" festgelegt sind. Es versteht sich, dass auch drei, vier, fünf, sieben oder mehr Schneidelemente 22 an einem Trägerabschnitt 20 festgelegt sein können.

Fig. 11 zeigt eine Variante, die hinsichtlich Aufbau und Funktionsweise generell der Ausführungsform der Fig. 6 bis 9 entspricht, jedoch nicht Gegenstand der beanspruchten Erfindung ist.

Bei dieser Ausführungsform sind die zwei Plattenelemente 22A, 22B der Fig. 6 bis 9 jeweils in zwei Teil-Plattenelemente unterteilt, die im Bereich der Ecken eines Quadrates angeordnet sind und in Fig. 11 mit 22A bis 22D bezeichnet sind. Der Trägerabschnitt 20^{IV} der Fig. 11 ist bei dieser Ausführungsform in der Draufsicht kreuzförmig.

Die Ausführungsform der Fig. 11 kann auch mit nur zwei diagonal gegenüberliegenden Teil-Plattenelementen realisiert werden (beispielsweise 22A, 22C). Ferner kann eine Mehrzahl von drei, vier, fünf, sechs, sieben, acht derartiger Teil-Plattenelemente über den Umfang verteilt angeordnet sein.

Gegenüber der Ausführungsform der Fig. 6 bis 9 ist hierbei der Trägerabschnitt 20^{IV} verstärkt ausgebildet. Die Ausführungsform der Fig. 6 bis 9 hat jedoch den Vorteil, dass eine größere Verbindungsfläche zwischen den Schneidelementen 22 und dem Trägerabschnitt 20 realisierbar ist und/oder nur zwei Flächen als Verbindungsflächen ausgebildet sind, so dass der Herstellungsaufwand bei der Ausführungsform der Fig. 6 bis 9 verringert ist.

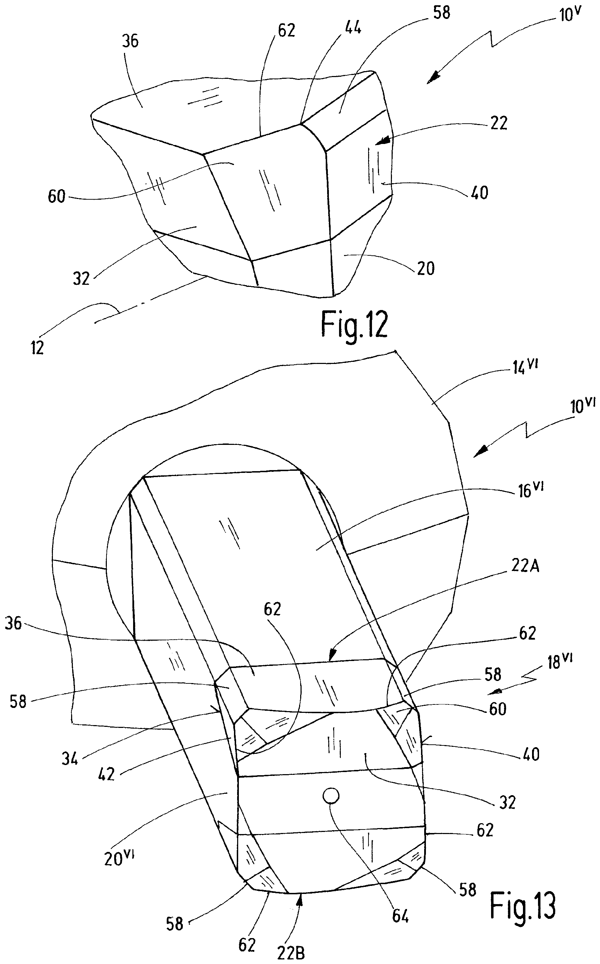

Fig. 12 zeigt eine schematische Ansicht einer Reibahle 10^{V}, bei der es sich um jede der oben genannten Reibahlen handeln kann. Es ist in Fig. 12 ein Bereich einer Schneidecke 44 eines Schneidelementes 22 gezeigt, das an einem Trägerabschnitt 20 festgelegt ist. Zum einen ist in Fig. 12 erkennbar, dass an dem Schneidelement 22 eine Rundschlifffase 58 ausgebildet ist, die konzentrisch zu dem Reibdurchmesser 46 ausgerichtet ist und sich in einer Richtung parallel zu der Längsachse 12 erstreckt. Die Rundschlifffase 58 kann sich in axialer Richtung über das Schneidelement 22 hinaus erstrecken, insbesondere in den Bereich des Halsabschnittes 16 hinein.

Ferner ist in Fig. 12 gezeigt, dass im Bereich der Schneidecke 44 eine Freifläche 60 bereitgestellt ist, die windschief zu der Längsachse 12 ausgerichtet ist. Durch die Freifläche 60 wird eine Schneidkante 62 gebildet, die ebenfalls windschief zu der Längsachse 12 ausgerichtet ist. Die Schneidkante 62 ist dabei an einer Kante der Außenfläche 36 ausgebildet. Durch die Ausgestaltung der Freifläche 60 wird erreicht, dass beim Reiben das Material "geschält" wird, wobei das Material entlang der Schneidkante 62 abgetragen wird. Hierdurch erfolgt das Reiben mit einem ruhigen Lauf.

Fig. 13 zeigt eine weitere Ausführungsform einer Reibahle 10^{VI}, die hinsichtlich Aufbau und Funktionsweise generell der Reibahle 10" der Fig. 6 bis 9 entspricht. Gleiche Elemente sind daher durch gleiche Bezugszeichen gekennzeichnet.

Man erkennt in Fig. 13, das die Rundschlifffase 58 im Bereich von Kanten ausgebildet ist, die am Übergang zwischen den Außenflächen 36 und den Seitenflächen 40, 42 ausgebildet sind, und sich über den Halsabschnitt 16^{VI} in axialer Richtung erstrecken kann.

Der Halsabschnitt 16^{VI} ist vorliegend im Querschnitt ebenfalls quadratisch, wie bei der Ausführungsform der Fig. 6 bis 9.

In Fig. 13 ist ferner die Freifläche 60 zu erkennen, die im Bereich von jeder der Schneidecken 44 ausgebildet ist und zur Ausbildung von vier Schneidkanten 62 führt.

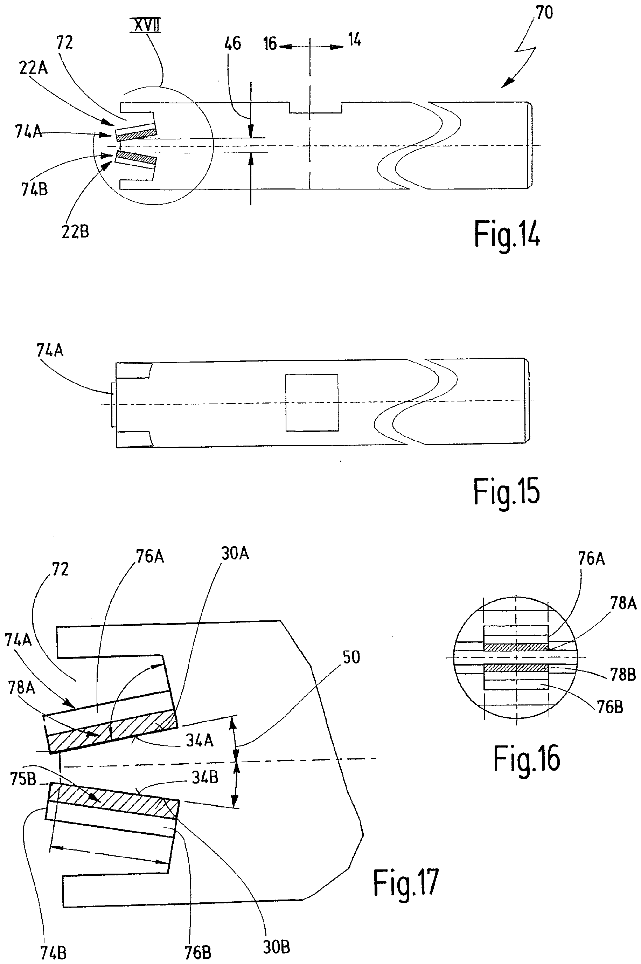

In den Fig. 14 bis 17 ist eine bevorzugte Ausführungsform zur Herstellung einer Reibahle dargestellt, und zwar der Reibahle 10" der Fig. 6 bis 9.

Gemäß den Fig. 14 bis 17 wird dabei ein Reibahlenrohling 70 bereitgestellt, der einen Außendurchmesser gleich dem Durchmesser des Schaftabschnittes 12 aufweist. Anschließend wird in einem vorderen stirnseitigen Bereich dieses Reibahlenrohlings 70 eine Ausnehmung 72 ausgebildet, die beispielsweise durch Erodieren hergestellt werden kann. Die Ausnehmung 72 kann ringförmig mit polygonaler Form sein.

Durch die Ausnehmung 72 werden die gegenüberliegenden Trägerflächen ausgebildet, auf die jeweils Schneidelemente 22A, 22B aufgebracht werden.

Die Schneidelemente 22A, 22B sind bei der vorliegenden Ausführungsform als Plattenelemente 74A, 74B ausgebildet, die jeweils eine Trägerschicht 76 und eine Schneidstoffschicht 78 aufweisen. Diese Schichten sind parallel zu den Auflageflächen 34A, 34B ausgerichtet.

Die Plattenelemente 74A, 74B sind dabei an den Trägerflächen 30A, 30B so angebracht, dass die Schneidstoffschichten 78A, 78B direkt an den Trägerflächen anliegen und die jeweiligen Trägerschichten 76A, 76B radial außen liegen.

Nach diesem Verbindungsschritt wird das Endmaß des Reibabschnittes hergestellt, indem der Reibahlenrohling 70 in einem Bereich, der den Reibabschnitt 18 und den Halsabschnitt 16 definiert, auf den Reibdurchmesser 46 abgetragen wird, wobei der Reibdurchmesser 46 (siehe Fig. 14) kleiner ist als der kleinste Innenumfangsabschnitt der Trägerschichten 76A, 76B. Diese Trägerschichten 76A, 76B werden bei dem Vorgang des Schleifens auf den Reibdurchmesser 46 vollständig abgetragen, so dass letztlich ein Schneidelement 22 in Form eines einstückigen Plattenelementes aus einer Schneidstoffschicht 78A, 78B an dem Trägerabschnitt 20 verbleibt, wie es beispielsweise in Fig. 8 zu sehen ist. Die in Fig. 8 gezeigten Schneidelemente 22A, 22B sind aus den Schneidstoffschichten 78A, 78B der Fig. 17 entstanden.

Im Bereich zwischen den Schneidelementen 22A, 22B kann, wie es in Fig. 13 bei 64 gezeigt ist, ein Kühlkanal vorgesehen sein, um Kühl- bzw. Schmierfluid für den Reibvorgang zuführen zu können.

## Patentansprüche

1. Reibahle (10) zur Feinbearbeitung von Bohrungen durch Reiben, mit einem Schaftabschnitt (14) zum Einspannen der Reibahle (10) und mit einem Halsabschnitt (16), der starr mit dem Schaftabschnitt (14) verbunden ist und entlang einer Längsachse (12) ausgerichtet ist, wobei an dem freien Ende des Halsabschnittes (16) ein Reibabschnitt (18) ausgebildet ist, wobei der Reibabschnitt (18) einen mit dem Halsabschnitt (16) starr verbundenen Trägerabschnitt (20) aufweist, an dem wenigstens ein Schneidelement (22) festgelegt ist,
wobei der Trägerabschnitt (20) wenigstens eine Trägerfläche (30) aufweist, die unter einem Trägerflächenwinkel (50) größer 0° und kleiner 90° in Bezug auf die Längsachse (12) ausgerichtet ist,
wobei das Schneidelement (22) als Plattenelement (22) ausgebildet ist, das eine Auflagefläche (34) aufweist, die auf der Trägerfläche (30) aufliegt, wobei das Plattenelement (22) so in Bezug auf den Trägerabschnitt (20) angeordnet ist, dass eine Schneidecke (44) an dem Plattenelement (22) gebildet ist, die im Schnittpunktbereich einer der Auflagefläche (34) gegenüberliegenden Außenfläche (36), einer vorderen Stirnfläche (32) und einer ersten Seitenfläche (40) des Plattenelementes (22) liegt, wobei die Schneidecke (44) einen Reibdurchmesser (46) definiert, **dadurch gekennzeichnet, dass**
eine Außenfläche (36) des Schneidelementes (22) parallel zu der Längsachse (12) ausgerichtet ist.

2. Reibahle nach Anspruch 1, **dadurch gekennzeichnet, dass** das Schneidelement (22) eine konzentrisch zu der Längsachse (12) ausgerichtete Rundschlifffase (56) aufweist.

3. Reibahle nach einem der Ansprüche 1 bis 2, **dadurch gekennzeichnet, dass** der Trägerflächenwinkel (50) im Bereich von 2° bis 45° liegt, insbesondere im Bereich von 3° bis 30°, besonders bevorzugt im Bereich von 5° bis 15°.

4. Reibahle nach einem der Ansprüche 1 bis 3, **dadurch gekennzeichnet, dass** das Schneidelement (22) fest mit dem Trägerabschnitt (20) verbunden ist, insbesondere über eine Löt- oder eine Klebeverbindung.

5. Reibahle nach einem der Ansprüche 1 bis 4, **dadurch gekennzeichnet, dass** das Schneidelement (22) einstückig aus einem Schneidstoff hergestellt ist, insbesondere aus CBN.

6. Reibahle nach einem der Ansprüche 1 bis 5, **dadurch gekennzeichnet, dass** der Trägerabschnitt (20) zwei Trägerflächen (30A, 30B) aufweist, die jeweils unter einem Trägerflächenwinkel (50) größer 0° und kleiner 90° in Bezug auf die Längsachse (12) ausgerichtet sind, derart, dass die Trägerflächen (30A, 30B) an einem vorderen Ende des Reibabschnittes (18) kürzer voneinander beabstandet sind als in einem hinteren, zum Halsabschnitt (16) hin weisenden Ende des Reibabschnittes (18).

7. Reibahle nach einem der Ansprüche 1 bis 6, **dadurch gekennzeichnet, dass** die Reibahle (10) einen Reibdurchmesser (46) im Bereich von 0,2 mm bis 30 mm aufweist, insbesondere im Bereich von 0,2 mm bis 5 mm.

8. Verfahren zum Herstellen einer Reibahle (10) nach einem der Ansprüche 1 bis 7, mit den Schritten:
- Bereitstellen eines zylindrischen Reibahlenrohlings (70);
- Ausbilden wenigstens einer Trägerfläche (30) im Bereich eines Reibabschnittes (18) des Reibahlenrohlings (70), wobei die Trägerfläche (30) unter einem Trägerflächenwinkel (50) im Bereich von größer gleich 0° und kleiner 90° in Bezug auf eine Längsachse (12) des Reibahlenrohlings (70) ausgerichtet ist;
- Festlegen eines als Plattenelement ausgebildeten Schneidelementes (22) mit einer Auflagefläche (34) auf der Trägerfläche (30); und
- Herstellen eines Fertigmaßes des Reibabschnittes (18).

9. Verfahren nach Anspruch 8, wobei das Plattenelement (22) eine Trägerschicht (76) und eine Schicht (78) aus einem Schneidstoff aufweist.

10. Verfahren nach Anspruch 9, wobei das Plattenelement (22) mit der Schneidstoffschicht (78) an der Trägerfläche (30) festgelegt wird.

11. Verfahren nach Anspruch 10, wobei das Herstellen des Fertigmaßes des Reibabschnittes (18) beinhaltet, die Trägerschicht (76) zu entfernen.

## Claims

1. Reamer (10) for fine machining of bores by reaming, comprising a shank portion (14) for clamping the reamer (10) and a neck portion (16) which is rigidly connected to the shank portion (14) and aligned along a longitudinal axis (12), wherein a reaming portion (18) is formed at the free end of the neck portion (16), the reaming portion (18) having a support portion (20) rigidly connected to the neck portion (16), at least one cutting element (22) being fixed to the support portion (20),
wherein the support portion (20) has at least one support surface (30) oriented at a support surface angle (50) greater than 0° and less than 90° with respect to the longitudinal axis (12),
wherein the cutting element (22) is configured as a plate element (22) having an abutment surface (34) resting on the support surface (30), wherein the plate element (22) is arranged with respect to the support portion (20) such that a cutting corner (44) is formed on the plate element (22), the cutting corner (44) being arranged in the intersection region of an outer surface (36) opposite from the abutment surface (34), of a front end surface (32) and of a first side surface (40) of the plate element (22), wherein the cutting corner (44) defines a reaming diameter (46),
**characterized in that**
an outer surface (36) of the cutting element (22) is oriented parallel to the longitudinal axis (12).

2. Reamer according to claim 1, **characterized in that** the cutting element (22) has a circular grinding chamfer (56) which is oriented concentrically to the longitudinal axis (12).

3. Reamer according to one of claims 1 to 2, **characterized in that** the support surface angle (50) lies in the range of 2° to 45°, in particular in the range of 3° to 30°, particularly preferably in the range of 5° to 15°.

4. Reamer according to one of claims 1 to 3, **characterized in that** the cutting element (22) is firmly connected to the support portion (20), in particular by a soldered or an adhesive connection.

5. Reamer according to one of claims 1 to 4, **characterized in that** the cutting element (22) is made in one piece from a cutting material, in particular CBN.

6. Reamer according to one of claims 1 to 5, **characterized in that** the support portion (20) has two support surfaces (30A, 30B) each oriented at a support surface angle (50) greater than 0° and less than 90° with respect to the longitudinal axis (12), such that the support surfaces (30A, 30B) are spaced apart from each other by a shorter distance at a front end of the reaming portion (18) than in a rear end of the reaming portion (18) facing the neck portion (16).

7. Reamer according to one of claims 1 to 6, **characterized in that** the reamer (10) has a reaming diameter (46) in the range of 0,2 mm to 30 mm, in particular in the range of 0,2 mm to 5 mm.

8. Method for manufacturing a reamer (10) according to one of claims 1 to 7, comprising the steps:
- providing a cylindrical reamer blank (70);
- forming at least one support surface (30) in the region of a reaming portion (18) of the reamer blank (70), the support surface (30) being oriented at a support surface angle (50) in the range of greater than or equal to 0° and less than 90° with respect to a longitudinal axis (12) of the reamer blank (70);
- fixing a cutting element (22) formed as a plate element with an abutment surface (34) on the support surface (30); and
- manufacturing a finished dimension of the reaming portion (18).

9. Method according to claim 8, wherein the plate element (22) has a support layer (76) and a layer (78) of a cutting material.

10. Method according to claim 9, wherein the plate element (22) is fixed to the support surface (30) with the cutting material layer (78).

11. Method according to claim 10, wherein the manufacturing of the finished dimension of the reaming portion (18) includes removing the support layer (76).

## Revendications

1. Alésoir (10) dévolu à l'usinage de précision d'alésages, par friction, comprenant une région (14) formant fût, affectée à l'ablocage dudit alésoir (10), et une région épaulée (16) reliée rigidement à ladite région (14) formant fût et orientée le long d'un axe longitudinal (12), une zone de friction (18) étant ménagée à l'extrémité libre de ladite région épaulée (16), laquelle zone de friction (18) est munie d'une zone de support (20) qui est reliée rigidement à ladite région épaulée (16), et à laquelle au moins un élément de coupe (22) est assujetti,
ladite zone de support (20) étant pourvue d'au moins une surface de support (30) orientée suivant un angle (50) supérieur à 0° et inférieur à 90° par rapport à l'axe longitudinal (12), ledit élément de coupe (22) étant réalisé en tant qu'élément aplati (22) doté d'une surface d'appui (34) reposant sur ladite surface de support (30), ledit élément aplati (22) étant agencé par rapport à ladite zone de support (20) de manière à former, sur ledit élément aplati (22), un coin tranchant (44) situé dans la zone d'intersection d'une surface extérieure (36) opposée à ladite surface d'appui (34), d'une surface extrême antérieure (32) et d'une première surface latérale (40) dudit élément aplati (22), sachant que ledit coin tranchant (44) définit un diamètre de friction (46),
**caractérisé par le fait**
**qu'**une surface extérieure (36) de l'élément de coupe (22) est orientée parallèlement à l'axe longitudinal (12).

2. Alésoir selon la revendication 1, **caractérisé par le fait que** l'élément de coupe (22) présente un biseau de rectification cylindrique (56), orienté concentriquement à l'axe longitudinal (12).

3. Alésoir selon l'une des revendications 1 à 2, **caractérisé par le fait que** l'angle (50) de la surface de support se situe dans la plage de 2° à 45°, notamment dans la plage de 3° à 30°, dans la plage de 5° à 15° avec préférence particulière.

4. Alésoir selon l'une des revendications 1 à 3, **caractérisé par le fait que** l'élément de coupe (22) est relié rigidement à la zone de support (20), notamment par l'intermédiaire d'une jonction brasée ou collée.

5. Alésoir selon l'une des revendications 1 à 4, **caractérisé par le fait que** l'élément de coupe (22) est fabriqué d'une seule pièce en un matériau de coupe, notamment en du CBN.

6. Alésoir selon l'une des revendications 1 à 5, **caractérisé par le fait que** la zone de support (20) compte deux surfaces de support (30A, 30B) orientées, à chaque fois, suivant un angle (50) supérieur à 0° et inférieur à 90° par rapport à l'axe longitudinal (12), de façon telle que lesdites surfaces de support (30A, 30B) soient espacées l'une de l'autre, à une extrémité antérieure de la zone de friction (18), d'une moindre distance qu'à une extrémité postérieure de ladite zone de friction (18) qui pointe vers la région épaulée (16).

7. Alésoir selon l'une des revendications 1 à 6, **caractérisé par le fait que** ledit alésoir (10) présente un diamètre de friction (46) situé dans la plage de 0,2 mm à 30 mm, notamment dans la plage de 0,2 mm à 5 mm.

8. Procédé de fabrication d'un alésoir (10) conforme à l'une des revendications 1 à 7, comprenant les étapes consistant à :
- apprêter une ébauche (70) d'alésoir cylindrique ;
- ménager au moins une surface de support (30) dans la région d'une zone de friction (18) de ladite ébauche (70) d'alésoir, laquelle surface de support (30) est orientée, par rapport à l'axe longitudinal (12) de ladite ébauche (70) d'alésoir, suivant un angle (50) situé dans la plage supérieure ou égale à 0°, et inférieure à 90° ;
- bloquer à demeure, sur ladite surface de support (30), un élément de coupe (22) réalisé sous la forme d'un élément aplati pourvu d'une surface d'appui (34) ; et
- produire une cote finale de ladite zone de friction (18).

9. Procédé selon la revendication 8, dans lequel l'élément aplati (22) comporte une couche de support (76) et une couche (78) en un matériau de coupe.

10. Procédé selon la revendication 9, dans lequel l'élément aplati (22) est assujetti à la surface de support (30) par la couche (78) de matériau de coupe.

11. Procédé selon la revendication 10, dans lequel la production de la cote finale de la zone de friction (18) inclut un enlèvement de la couche de support (76).
